# EUROPEAN PATENT APPLICATION

(11) **EP 2 808 930 A1**
(43) Date of publication of application: **03.12.2014**
(21) Application number: 13740810.0
(22) Date of filing: 23.01.2013
(51) Int. Cl.: H01M 8/04, H01M 8/06, H01M 8/24, H01M 8/10, H01M 8/12

(54) **SECONDARY BATTERY TYPE FUEL CELL SYSTEM**

(30) Priority: 24.01.2012 JP 2012012411
(71) Applicant: Konica Minolta, Inc., Tokyo 100-7015 (JP)
(72) Inventor: NODA Atsuhiro, Chiyoda-ku Tokyo 100-7015 (JP)
(74) Representative: Hoffmann Eitle
(86) International application number: PCT/JP2013/051235
(87) International publication number: WO 2013/111758

(57) **Abstract**

A secondary battery type fuel cell system is provided with: a fuel cell unit which generates oxidation gas during power generation and has a fuel electrode, an oxidant electrode, and an electrolyte sandwiched between the fuel electrode and the oxidant electrode; and a fuel generation unit which generates fuel in the form of reducing gas by means of the chemical reaction with the oxidation gas and which can generate and regenerate the oxidation gas by means of the reverse reaction of the aforementioned chemical reaction. In a closed or hermetically-sealed space containing the fuel electrode and the fuel generation unit, the oxidation gas or the reducing gas is forcibly circulated between the fuel cell unit and the fuel generation unit, and the flow direction of the gas flowing along the surface of the fuel electrode is set to be the same during the power generation operation and the charging operation.

## Description

### Technical Field

The present invention relates to a secondary battery type fuel cell system capable of performing not only a power generation operation but also a charging operation.

### Background Art

In a fuel cell, typically, a solid high polymer electrolyte membrane using a solid polymer ion exchange membrane, a solid oxide electrolyte membrane using an yttria-stabilized zirconia (YSZ), or the like is sandwiched from both sides between a fuel electrode (anode) and an oxidant electrode (cathode) to form one cell. Further, there are provided a fuel gas flow path for supplying a fuel gas (for example, a hydrogen gas) to the fuel electrode and an oxidant gas flow path for supplying an oxidant gas (for example, oxygen or air) to the oxidant electrode, and the fuel gas and the oxidant gas are supplied to the fuel electrode and the oxidant electrode via these flow paths, respectively, whereby power generation is performed.

The fuel cell in principle allows electric power energy to be extracted therefrom with high efficiency and thus achieves energy saving. In addition, the fuel cell represents an environmentally friendly technology of power generation. For these reasons, the fuel cell is expected to play a key role in solving energy and environmental concerns on a global scale.

### List of Citations

### Patent Literature

Patent Document 1: PCT International Publication WO/2011/040182
Patent Document 2: PCT International Publication WO/2011/052283

### Summary of the Invention

### Technical Problem

As a secondary battery type fuel cell system capable of power generation and charging, there has been proposed a system in which a space where a fuel electrode and a fuel generation member are disposed is sealed, and therein, a reaction is accelerated by spontaneous diffusion (see Patent Document 1 and Patent Document 2). There is, however, a problem that, in a case of spontaneous diffusion, a resulting reaction speed of a fuel gas is limited, making it impossible to obtain high output power and to achieve stability in output.

Furthermore, a secondary battery is desired to have a long cycle life, and a secondary battery type fuel cell system, therefore, also is desired to have a long cycle life so as to enable long-term use thereof.

In view of the above-described circumstances, the present invention has as its object to provide a secondary battery type fuel cell system that can provide a high output in a stabilized state, and long-term use of which is enabled.

### Solution to the Problem

In order to achieve the above-described object, a secondary battery type fuel cell system according to the present invention includes a fuel cell portion that has a fuel electrode, an oxidant electrode, and an electrolyte that is sandwiched between the fuel electrode and the oxidant electrode and generates an oxidizing gas at the time of power generation, and a fuel generation portion that generates a fuel, which is a reducing gas, by a chemical reaction with the oxidizing gas, and generates an oxidizing gas by a reaction reverse to the chemical reaction, thus being able to be regenerated. In the secondary battery type fuel cell system, in a sealed or closed space including the fuel electrode and the fuel generation portion, the oxidizing gas or the reducing gas is forcibly caused to circulate between the fuel cell portion and the fuel generation portion, and a flow direction of the gas flowing along a surface of the fuel electrode at the time of a power generation operation is set to be the same as that at the time of a charging operation, and vice versa.

### Advantageous Effects of the Invention

A secondary battery type fuel cell system according to the present invention can provide a high output in a stabilized state, and long-term use thereof is enabled.

### Brief Description of Drawings

[FIG. 1] is a diagram showing a schematic configuration of a secondary battery type fuel cell system according to a first embodiment of the present invention.
[FIG. 2] is a diagram showing a schematic configuration of the secondary battery type fuel cell system according to the first embodiment of the present invention.
[FIG. 3A] is a diagram showing a relationship, with respect to a position on a fuel supply surface of a fuel electrode, between a concentration of an oxidizing gas and a degree of oxidization of the fuel electrode at the time of a power generation operation.
[FIG. 3B] is a diagram showing a relationship, with respect to a position on the fuel supply surface of the fuel electrode, between a degree of oxidization of the fuel electrode and a concentration of a reducing gas at the time of a charging operation.
[FIG. 4] is a diagram showing a schematic configuration of a secondary battery type fuel cell system according to a second embodiment of the present invention.
[FIG. 5] is a diagram showing a schematic configuration of a secondary battery type fuel cell system according to a third embodiment of the present invention.
[FIG. 6] is a diagram showing a schematic configuration of a secondary battery type fuel cell system according to a fourth embodiment of the present invention.

### Description of Embodiments

The following describes embodiments of the present invention with reference to the appended drawings. The present invention, however, is not limited to the after-mentioned embodiments.

### <First Embodiment>

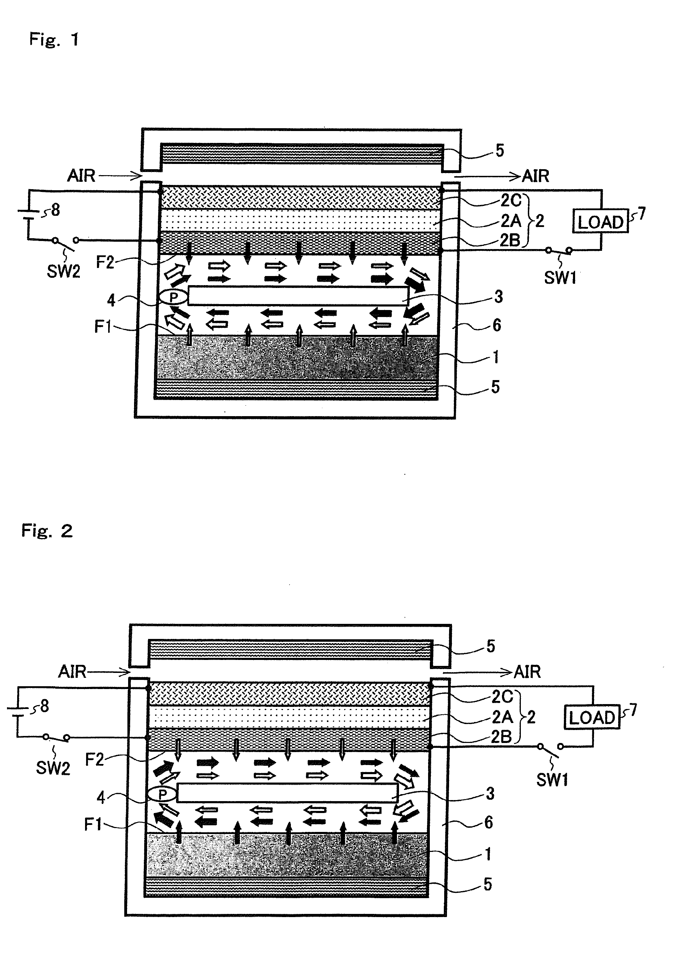

FIGS. 1 and 2 each show a schematic configuration of a secondary battery type fuel cell system according to a first embodiment of the present invention. In FIGS. 1 and 2, a reducing gas (for example, hydrogen or a carbon monoxide gas), which is a fuel, is schematically represented by a hollow arrow, and an oxidizing gas (for example, water vapor or a carbon dioxide gas) is schematically represented by a solid arrow. Furthermore, a thickness of each of the arrows schematically indicates an amount of a corresponding one of the gases.

The secondary battery type fuel cell system according to the first embodiment of the present invention includes a fuel generation portion 1, a fuel cell portion 2, a partition member 3, a pump 4, a heater 5 that adjusts a temperature of each of the fuel generation portion 1 and the fuel cell portion 2, and a housing 6 that houses the fuel generation portion 1, the fuel cell portion 2, the partition member 3, the pump 4, and the heater 5.

The fuel generation portion 1 can be made of, for example, a material that is obtained by using a metal as a mother material and adding a metal or a metal oxide to a surface of the metal as a mother material, generates a fuel (for example, hydrogen) by an oxidation reaction with an oxidizing gas (for example, water vapor), and can be regenerated by a reduction reaction with a reducing gas (for example, hydrogen). The metal as a mother material can be, for example, any of Ni, Fe, Pd, V, Mg, and alloys based on these metals, and particularly preferable among these is Fe since Fe is less costly and easy to process. Furthermore, examples of a metal that can be added thereto include Al, Rd, Pd, Cr, Ni, Cu, Co, V, and Mo, and examples of a metal oxide that can be added thereto include SiO₂ and TiO₂. The metal as a mother material and the metal to be added thereto, however, should not be of the same type. In this embodiment, as the fuel generation portion 1, a fuel generation member containing Fe as a principal component is used. Furthermore, in this embodiment, the fuel generation portion 1 uniformly releases a fuel from a fuel release surface F1 thereof.

For example, by an oxidation reaction expressed by Equation (1) below, the fuel generation member containing Fe as a principal component can generate a hydrogen gas, which is a fuel (reducing gas), by consuming water vapor, which is an oxidizing gas.

4H₂O + 3Fe → 4H2 + Fe₃O₄ (1)

As the oxidation reaction of iron expressed by Equation (1) above progresses, transformation of the iron into an iron oxide progresses to decrease a remaining amount of the iron. By a reaction reverse to Equation (1) above, namely, a reduction reaction expressed by Equation (2) below, however, the fuel generation portion 1 can be regenerated. The oxidation reaction of iron expressed by Equation (1) above and the reduction reaction expressed by Equation (2) below can be performed at a low temperature of not higher than 600°C.

4H₂ + Fe₃O₄ → 3Fe + 4H₂O (2)

In order to have improved reactivity, the fuel generation portion 1 is desired to have an increased surface area per unit volume. A surface area per unit volume of the fuel generation portion 1 could be increased by, for example, making the principal component of the fuel generation portion 1 into fine particles and molding the fine particles into the fuel generation portion 1. Such fine particles can be obtained by, for example, a method in which particles are ground by pulverization using a ball mill or the like. Moreover, a surface area of fine particles may be further increased by producing cracks in the fine particles by a mechanical technique or the like. Or alternatively, a surface area of fine particles may be further increased by roughening surfaces of the fine particles by acid treatment, alkali treatment, blast processing or the like. Furthermore, the fuel generation portion 1 may be formed by solidifying fine particles such that voids of such a size as to allow passage therethrough of gas remain in the solidified fine particles or may be formed by making the principal component into pellet-shaped grains and filling a multitude of the pellet-shaped grains in a space.

As shown in FIGS. 1 and 2, the fuel cell portion 2 has an MEA structure (membrane electrode assembly) in which a fuel electrode 2B and an air electrode 2C, which is an oxidant electrode, are joined to both sides of an electrolyte membrane 2A, respectively. While FIGS. 1 and 2 show a structure in which only one MEA is provided, a plurality of MEAs may be provided, and a stacked structure of a plurality ofMEAs also may be adopted.

A fuel supply surface F2 of the fuel electrode 2B to which a fuel is supplied and the fuel release surface F1 of the fuel generation portion 1 from which a fuel is released are opposed to each other and disposed at a given spacing from and parallel to each other. Furthermore, while in this embodiment, the fuel electrode 2B and the fuel generation portion 1 are each in the shape of a flat plate, a configuration also may be adopted in which the fuel electrode 2B and the fuel generation portion 1 are each formed in a cylindrical shape or the like, and the fuel supply surface F2 and the fuel release surface F1 are disposed to be opposed to each other.

The partition member 3 is provided between the fuel supply surface F2 and the fuel release surface F1. The partition member 3 is connected to an inner wall of the housing 6 on a front side and a depth side with respect to the plane of each of FIGS. 1 and 2. On the other hand, in each of left and right directions on the plane of FIGS. 1 and 2, a gap is provided between the partition member 3 and the inner wall of the housing 6.

The pump 4 forcibly causes gas to circulate, which is present in a space between the fuel supply surface F2 and the fuel release surface F1. In place of the pump 4, any other type of circulator (for example, a blower or a compressor) may be used.

The housing 6 has an air supply port for supplying air into a space housing the air electrode 2C and an air exhaust port for exhausting air from the space housing the air electrode 2C. A flow of air could be controlled by using, for example, a fan provided outside the housing 6. A flow direction of air is not limited to a direction shown in FIGS. 1 and 2 and may be reverse to the direction shown in FIGS. 1 and 2. Furthermore, while in this embodiment, air is used as an oxidant gas, an oxidant gas of any other type than air may be used.

As a material of the electrolyte membrane 2A, for example, a solid oxide electrolyte using yttria-stabilized zirconia (YSZ) can be used, or, for example, a solid high polymer electrolyte such as Nafion (a trademark of DuPont), a cation conductive polymer, or an anion conductive polymer can be used. There is, however, no limitation thereto, and any type of material can be used as long as it satisfies characteristics of as an electrolyte for a fuel cell, such as to allow permeation therethrough of hydrogen ions or oxygen ions or to allow permeation therethrough of hydroxide ions. This embodiment uses, as the electrolyte membrane 2A, a solid oxide electrolyte using an electrolyte allowing permeation therethrough of oxygen ions or hydroxide ions, such as, for example, yttria-stabilized zirconia (YSZ).

A space housing the partition member 3, the fuel generation portion 1, and the heater 5, which is formed by the housing 6 and the fuel cell portion 2, is filled mainly with an oxidizing gas (for example, water vapor or carbon dioxide) and then is sealed or closed, and in the space, a fuel (a reducing gas such as, for example, a hydrogen gas or a carbon monoxide gas) may be contained in a small amount. In this sealed or closed space, a hydrogen gas, which is a reducing gas generated from the fuel generation portion 1, and water vapor, which is an oxidizing gas generated as a result of power generation, circulate to be used for power generation and an oxidation reaction, and a hydrogen gas, which is a reducing gas generated by electrolysis, and water vapor, which is an oxidizing gas generated from the fuel generation portion 1, circulate to be used for charging and a reduction reaction.

At the time of a power generation operation, as shown in FIG. 1, a switch SW1 is turned on and a switch SW2 is turned off so that the fuel cell portion 2 is electrically connected to a load 7. On the other hand, at the time of a charging operation, as shown in FIG. 2, the switch SW1 is turned off and the switch SW2 is turned on so that the fuel cell portion 2 is electrically connected to a power source 8.

For example, in a case where hydrogen is used as a fuel, in this embodiment, at the time of a power generation, a reaction expressed by Equation (3) below occurs at the fuel electrode 2B.

H₂ + O²⁻ → H₂O + 2e⁻ (3)

Electrons generated by the reaction expressed by Formula (3) above travel from the fuel electrode 2B through the load 7 to reach the air electrode 2C, and a reaction expressed by Formula (4) below occurs at the air electrode 2C.

1/2O₂ + 2e⁻ → O²⁻ (4)

Then, oxygen ions generated by the reaction expressed by Formula (4) above travel through the electrolyte membrane 2A to reach the fuel electrode 2B. The above-described sequence of reactions is performed repeatedly, and this is how the fuel cell portion 2 performs a power generation operation.

Further, by the oxidation reaction of Fe expressed by Formula (1) above, the fuel generation portion 1 consumes water vapor supplied from the fuel cell portion 2 to generate a hydrogen gas and supplies the hydrogen gas to the fuel cell portion 2.

Furthermore, at the time of a charging operation, the fuel cell portion 2 operates as an electrolyzer, and reactions reverse to the reactions expressed by Formulae (3) and (4) above occur, in which case, on a fuel electrode 2B side, water vapor is consumed to generate a hydrogen gas, and at the fuel generation portion 1, by the reduction reaction expressed by Formula (2) above, transformation from an iron oxide into iron progresses to increase a remaining amount of iron, i.e. the fuel generation portion 1 is regenerated, and it then consumes the hydrogen gas supplied from the fuel cell portion 2 to generate water vapor and supplies the water vapor to the fuel cell portion 2.

The electrolyte membrane 2A, when made of a solid oxide electrolyte, can be formed by an electrochemical vapor deposition method (CVD-EVD method; chemical vapor deposition-electrochemical vapor deposition) or the like and, when made of a solid high polymer electrolyte, can be formed by a coating method or the like.

Each of the fuel electrode 2B and the air electrode 2C can be made up of, for example, a catalyst layer that comes in contact with the electrolyte membrane 2A and a diffusion electrode that is stacked on the catalyst layer. As the catalyst layer, for example, carbon black supporting platinum black or a platinum alloy can be used. Furthermore, as a material of the diffusion electrode of the fuel electrode 2B, for example, carbon paper, a Ni-Fe-based cermet or a Ni-YSZ-based cermet can be used. Furthermore, as a material of the diffusion electrode of the air electrode 2C, for example, carbon paper, a La-Mn-O-based compound or a La-Co-Ce-based compound can be used. Each of the fuel electrode 2B and the air electrode 2C can be formed by, for example, a vapor deposition method.

In the secondary battery type fuel cell system according to the first embodiment of the present invention, by the pump 4, a fuel gas is forcibly caused to circulate, and thus compared with a case of spontaneous diffusion, a flow velocity thereof is increased, so that a fuel for causing a reaction at the fuel electrode 2B can be sufficiently supplied to the fuel electrode 2B. Thus, compared with the case of spontaneous diffusion, an increased output is obtained, and a flow of gas can be controlled to be constant, so that an output can be stabilized.

Herein, in a case where a fuel gas is forcibly caused to circulate to cause a flow of gas along the fuel supply surface F2 of the fuel electrode 2B, in the gas flowing along the fuel supply surface F2 of the fuel electrode 2B, the fuel gas has a concentration that varies from an upstream side to a downstream side of the flowing gas. At the time of a power generation operation, on the upstream side of the gas flowing along the fuel supply surface F2 of the fuel electrode 2B, a fuel generated by oxidation of the fuel generation portion 1 is supplied, and a resulting state is that the fuel is at a high concentration. On the other hand, at the time of the power generation operation, on the downstream side of the gas flowing along the fuel supply surface F2 of the fuel electrode 2, the fuel, while traveling from the upstream side to reach the downstream side, is used at the fuel electrode 2B to generate an oxidizing gas (for example, water vapor in a case where hydrogen is used as the fuel), and a resulting state is that the fuel is at a low concentration and the oxidizing gas is at a high concentration. As thus described, the oxidizing gas and the reducing gas each has a concentration that varies from the upstream side to the downstream side.

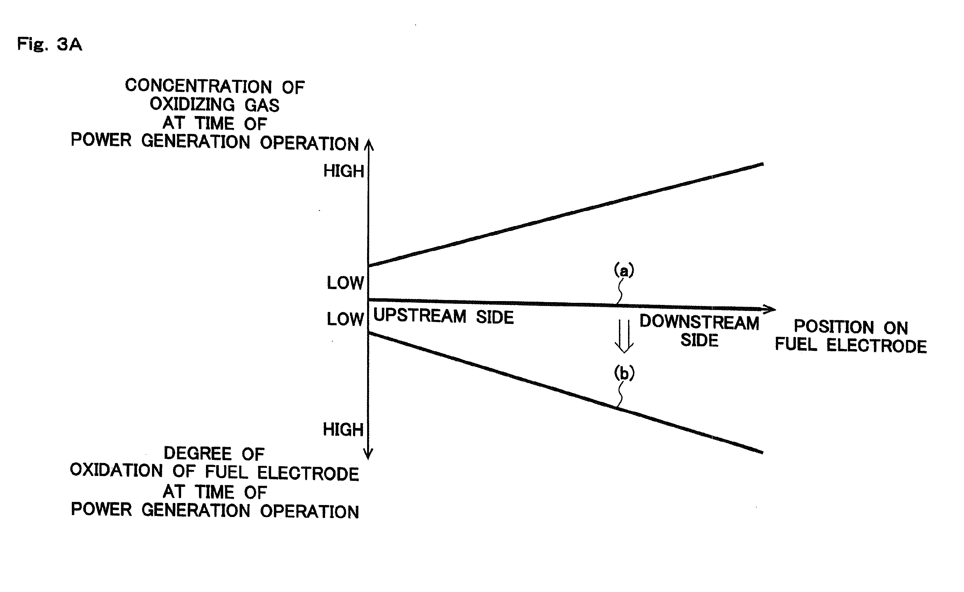

At the time of a power generation operation, the fuel cell portion 2 is made to operate in a high-temperature state so that the reactions expressed by Formulae (3) and (4) above occur, and thus on a downstream side of gas flowing along the fuel supply surface F2 of the fuel electrode 2B, where water vapor is at a high concentration, oxidation of the fuel electrode 2B progresses to a greater extent. That is, from a state before the flow of the gas is caused (i.e. a state where no oxidation of the fuel electrode has occurred), which is indicated by a line (a) in FIG. 3A, as indicated by a line (b) in FIG. 3A, at the time of a power generation operation, on a downstream side of the gas flowing along the fuel supply surface F2 of the fuel electrode 2B, a transition occurs to a state where, compared with an upstream side of the gas flowing along the fuel supply surface F2 of the fuel electrode 2B, oxidation of the fuel electrode 2B has progressed to a greater extent.

At an oxidized part of the electrode, a reaction of a fuel is slowed down compared with other parts of the electrode, so that an output itself of the fuel cell portion 2 is decreased. Furthermore, if the operation is continued in that state, since a power generation reaction of the fuel cell portion 2 is a heat generation reaction, at the oxidized part of the fuel electrode, a heat generation amount becomes smaller than that at any other part of the fuel electrode, which results in a temperature decrease, so that temperature unevenness occurs in the fuel cell portion 2. Further, the temperature unevenness leads to mechanical distortion, and thus deterioration of the fuel cell portion 2 progresses. Particularly in a case of a solid oxide type fuel cell in which an electrolyte is made of ceramic, even slight distortion in a main body of the fuel cell may result in breakage, making it difficult to enable long-term use thereof. Such deterioration of the fuel electrode due to mechanical distortion has a significant influence particularly in a case where the fuel electrode has a uniform and thin thickness.

With the above in view, in the secondary battery type fuel cell system according to the first embodiment of the present invention, a flow direction of gas flowing along the fuel supply surface F2 of the fuel electrode 2B at the time of a power generation operation is set to be the same as that at the time of a charging operation, and vice versa. In this embodiment, as shown in FIGS. 1 and 2, it is assumed that, both at the time of a power generation operation and at the time of a charging operation, a left side as viewed facing the plane of the drawings is an upstream side of gas flowing along the fuel supply surface F2 of the fuel electrode 2B, and a right side as viewed facing the plane of the drawing is a downstream side of the gas flowing along the fuel supply surface F2 of the fuel electrode 2B. In this embodiment, a distance between the fuel supply surface of the fuel electrode 2B and a surface of the fuel electrode 2B where it is joined to the electrolyte membrane 2A is uniform over the entire region of the fuel electrode 2B, and thus gas flowing along the fuel supply surface of the fuel electrode 2B can be rephrased as gas flowing along the surface of the fuel electrode 2B where it is joined to the electrolyte membrane 2A.

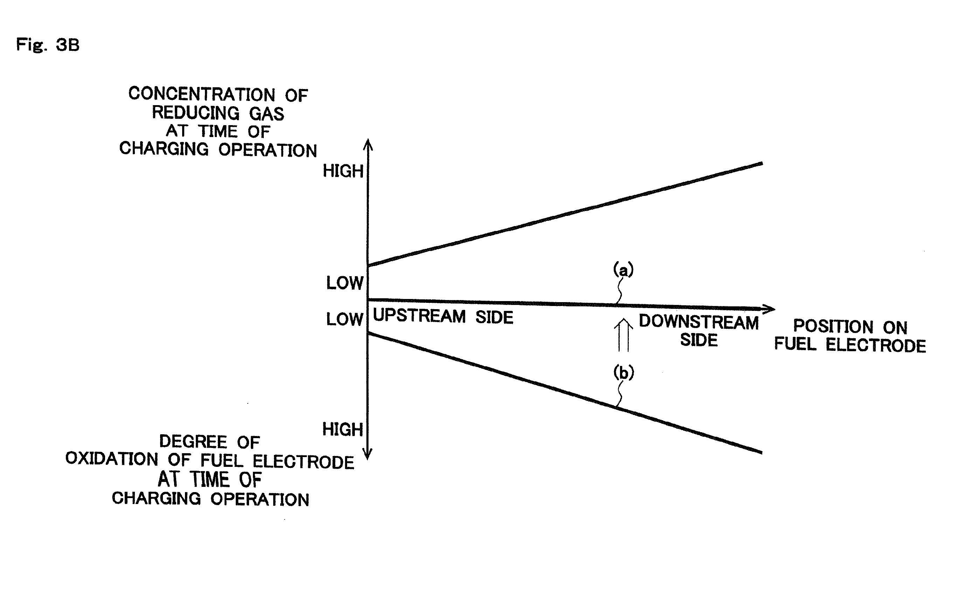

Meanwhile, at the time of a charging operation, as shown in FIG. 3B, on an upstream side of gas flowing along the fuel supply surface F2 of the fuel electrode 2B, an oxidizing gas (for example, water vapor in a case where hydrogen is used as a fuel) generated by reduction of the fuel generation portion 1 is supplied, a resulting state is that the oxidizing gas is at a high concentration. On the other hand, at the time of the charging operation, on a downstream side of the gas flowing along the fuel supply surface F2 of the fuel electrode 2B, the oxidizing gas, while traveling from the upstream side to reach the downstream side, is used for an electrolysis reaction at the fuel electrode 2B to generate a reducing gas (for example, hydrogen in a case where hydrogen is used as a fuel), and a resulting state is that the oxidizing gas is at a low concentration and the reducing gas is at a high concentration. Since the reducing gas has a concentration that is higher on the downstream side, the reduction is accelerated to a greater extent on the downstream side than on the upstream side, so that, as in FIG. 3B showing that a line (b) approximates a line (a) representing an initial value, a degree of oxidation is brought back to a state of being uniform throughout from the upstream side to the downstream side.

As described above, a flow direction of gas flowing along the fuel supply surface F2 of the fuel electrode 2B at the time of a power generation operation is set to be the same as that at the time of a charging operation, and vice versa, and thus a part of the fuel electrode 2B (a downstream side of the gas flowing along the fuel supply surface F2 of the fuel electrode 2B), where oxidation had been progressing at the time of the power generation operation, is brought to a state, at the time of the charging operation, where a reducing gas is at a high concentration and thus is easily reduced. That is, in the secondary battery type fuel cell system according to the first embodiment of the present invention, a flow direction of gas flowing along the fuel supply surface F2 of the fuel electrode 2B at the time of a power generation operation is set to be the same as that at the time of a charging operation, and vice versa, and thus a reducing gas proportional to a degree of oxidation of the fuel electrode 2B can be supplied to the fuel electrode 2B at the time of the charging operation, as a result of which efficiency in reducing the fuel electrode 2B is improved, and in addition, a degree of reduction of the fuel electrode 2B at the end of the charging operation can be made uniform over the entire region of the fuel electrode 2B. This can suppress temperature unevenness in the fuel cell portion 2 and mechanical distortion resulting from such temperature unevenness in the fuel cell portion 2. Furthermore, the fuel electrode 2B, after having been reduced, can be used in the same way as before its oxidation, i.e. can be subjected to repeated cycles of power generation (oxidation of the fuel electrode 2B) → charging (reduction of the fuel electrode 2B) → power generation (oxidation of the fuel electrode 2B) → .... Thus, long-term use of the secondary battery type fuel cell system is enabled.

### <Second Embodiment>

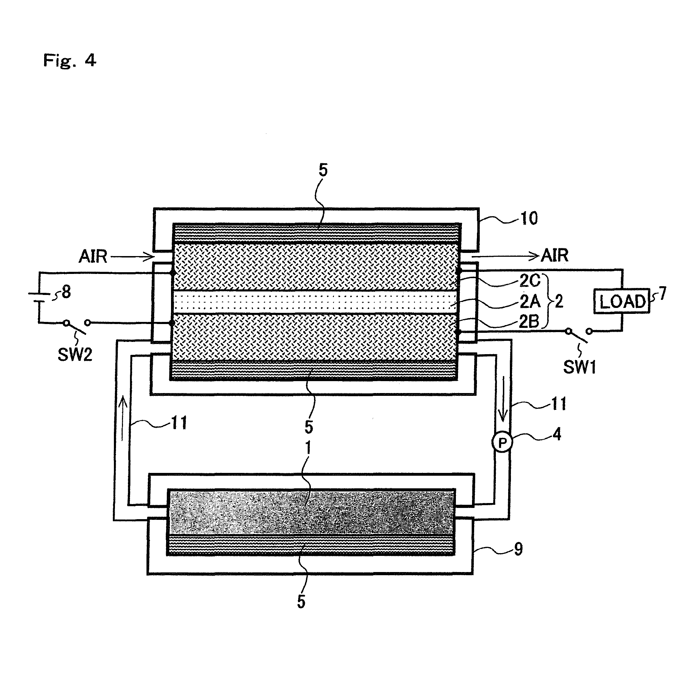

FIG. 4 shows a schematic configuration of a secondary battery type fuel cell system according to a second embodiment of the present invention. In FIG. 4, portions that are the same as those in FIGS. 1 and 2 are indicated by the same reference characters, and detailed descriptions thereof are omitted. Furthermore, various modified examples explained as appropriate in the first embodiment of the present invention may be applied also in the second embodiment unless any particular contradiction arises. The same holds true for after-mentioned third and fourth embodiments of the present invention.

The secondary battery type fuel cell system according to the second embodiment of the present invention has a configuration in which a fuel generation portion 1 and a heater 5 that adjusts a temperature in the fuel generation operation 1 are housed in a housing 9, while a fuel cell portion 2 and a heater 5 that adjusts a temperature in the fuel cell portion 2 are housed in a housing 10, and there is provided a duct 11 for causing gas to circulate between the fuel generation portion 1 and the fuel cell portion 2, with a pump 4 provided thereon. That is, compared with the secondary battery type fuel cell system according to the first embodiment of the present invention having a configuration in which the fuel generation portion 1 and the fuel cell portion 2 are housed in the common housing 3, the secondary battery type fuel cell system according to the second embodiment of the present invention has a configuration in which the fuel generation portion 1 and the fuel cell portion 2 are housed in the separate housings (housings 9 and 10), respectively.

In the secondary battery type fuel cell system according to the second embodiment of the present invention, a flow direction of gas flowing along a surface of a fuel electrode 2B where it is joined to an electrolyte membrane 2A at the time of a power generation operation is set to be the same as that at the time of a charging operation, and vice versa. In this embodiment, it is assumed that, both at the time of a power generation operation and at the time of a charging operation, as shown in FIG. 4, a left side as viewed facing the plane of the drawing is an upstream side of gas flowing along the surface of the fuel electrode 2B where it is joined to the electrolyte membrane 2A, and a right side as viewed facing the plane of the drawing is a downstream side of the gas flowing along the surface of the fuel electrode 2B where it is joined to the electrolyte membrane 2A.

Furthermore, a configuration may be adopted in which a space is provided between the fuel electrode 2B and the heater 5, and an end portion of the circulation path 11 is connected to the space. In this case, a flow direction of gas flowing along a fuel supply surface of the fuel electrode 2B at the time of a power generation operation is set to be the same as that at the time of a charging operation, and vice versa. In this embodiment, a distance between the fuel supply surface of the fuel electrode 2B and the surface of the fuel electrode 2B where it is joined to the electrolyte membrane 2A is uniform over the entire region of the fuel electrode 2B, and thus gas flowing along the fuel supply surface of the fuel electrode 2B can be rephrased as gas flowing along the surface of the fuel electrode 2B where it is joined to the electrolyte membrane 2A.

A power generation reaction and a charging reaction that occur at various portions of the secondary battery type fuel cell system according to the second embodiment of the present invention are the same as the power generation reaction and the charging reaction that occur at various portions of the secondary battery type fuel cell system according to the first embodiment of the present invention, and thus the secondary battery type fuel cell system according to the second embodiment of the present invention provides similar effects to those provided by the secondary battery type fuel cell system according to the first embodiment of the present invention.

### <Third Embodiment>

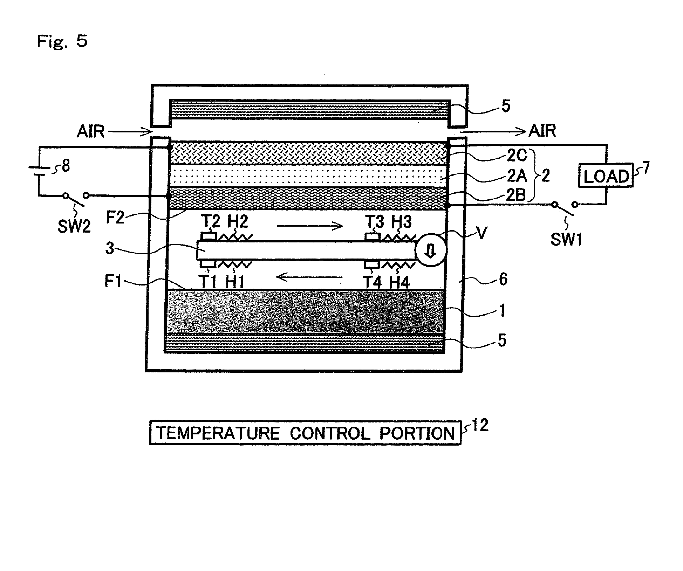

FIG. 5 shows a schematic configuration of a secondary battery type fuel cell system according to a third embodiment of the present invention. In FIG. 5, portions that are the same as those in FIGS. 1 and 2 are indicated by the same reference characters, and detailed descriptions thereof are omitted. Furthermore, in FIG. 5, for the sake of avoiding complexity of the drawing, connection lines connecting first to fourth heaters H1 to H4 and first to fourth temperature sensors T1 to T4 to a temperature control portion 12 are not drawn.

The secondary battery type fuel cell system according to the third embodiment of the present invention has a configuration in which the pump 4 is removed from the secondary battery type fuel cell system according to the first embodiment of the present invention, and instead, the first to fourth heaters H1 to H4, the first to fourth temperature sensors T1 to T4, a check valve V, and the temperature control portion 12 are provided.

The first heater H1 heats a vicinity of a left side part of a fuel generation portion 1 as viewed facing the plane of the drawing, and the first temperature sensor T1 detects a temperature T₁ of the vicinity of the left side part of the fuel generation portion 1 as viewed facing the plane of the drawing. The second heater H2 heats a vicinity of a left side part of a fuel electrode 2B as viewed facing the plane of the drawing, and the second temperature sensor T2 detects a temperature T₂ of the vicinity of the left side part of the fuel electrode 2B as viewed facing the plane of the drawing. The third heater H3 heats a vicinity of a right side part of the fuel electrode 2B as viewed facing the plane of the drawing, and the third temperature sensor T3 detects a temperature T₃ of the vicinity of the right side part of the fuel electrode 2B as viewed facing the plane of the drawing. The fourth heater H4 heats a vicinity of a right side part of the fuel generation portion 1 as viewed facing the plane of the drawing, and the fourth temperature sensor T4 detects a temperature T₄ of the vicinity of the right side part of the fuel generation portion 1 as viewed facing the plane of the drawing. The check valve V is disposed in a flow path on a right side of a partition member 3 as viewed facing the plane of the drawing.

The temperature control portion 12 controls, while referring to the temperatures T₁ to T₄ detected by the first to fourth temperature sensors T1 to T4, respectively, the first to fourth heaters H1 to H4 so that, both at the time of a power generation operation and at the time of a charging operation, T₁ > T₂ > T₃ > T₄.

Since T₁ > T₂, a part of gas, which is present in the vicinity of the left side part of the fuel generation portion 1 as viewed facing the plane of the drawing, moves by thermal diffusion to the vicinity of the left side part of the fuel electrode 2B as viewed facing the plane of the drawing.

Furthermore, since T₂ > T₃, another part of the gas, which is present in the vicinity of the left side part of the fuel electrode 2B as viewed facing the plane of the drawing, moves by thermal diffusion to the vicinity of the right side part of the fuel electrode 2B as viewed facing the plane of the drawing.

Furthermore, since T₃ > T₄, still another part of the gas, which is present in the vicinity of the right side part of the fuel electrode 2B as viewed facing the plane of the drawing, moves by thermal diffusion to the vicinity of the right side part of the fuel generation portion 1 as viewed facing the plane of the drawing.

Since the check valve V is provided on the right side of the partition member 3 as viewed facing the plane of the drawing, these parts of the gas circulate clockwise in accordance with a temperature gradient mentioned above.

As described above, a temperature gradient is provided in a gas flow path for causing gas to circulate between the fuel generation portion 1 and the fuel cell portion 2, and thus gas that is to circulate in the gas flow path can be forcibly caused to circulate.

A power generation reaction and a charging reaction that occur at various portions of the secondary battery type fuel cell system according to the third embodiment of the present invention are the same as the power generation reaction and the charging reaction that occur at the various portions of the secondary battery type fuel cell system according to the first embodiment of the present invention, and thus the secondary battery type fuel cell system according to the third embodiment of the present invention provides similar effects to those provided by the secondary battery type fuel cell system according to the first embodiment of the present invention.

It is also possible to implement the first embodiment of the present invention and the third embodiment of the present invention in combination, i.e. to use a circulator for forcibly causing gas to circulate between the fuel generation portion 1 and the fuel cell portion 2 together with a heating device that provides a temperature gradient in a gas flow path for causing gas to circulate between the fuel generation portion 1 and the fuel cell portion 2.

### <Fourth Embodiment>

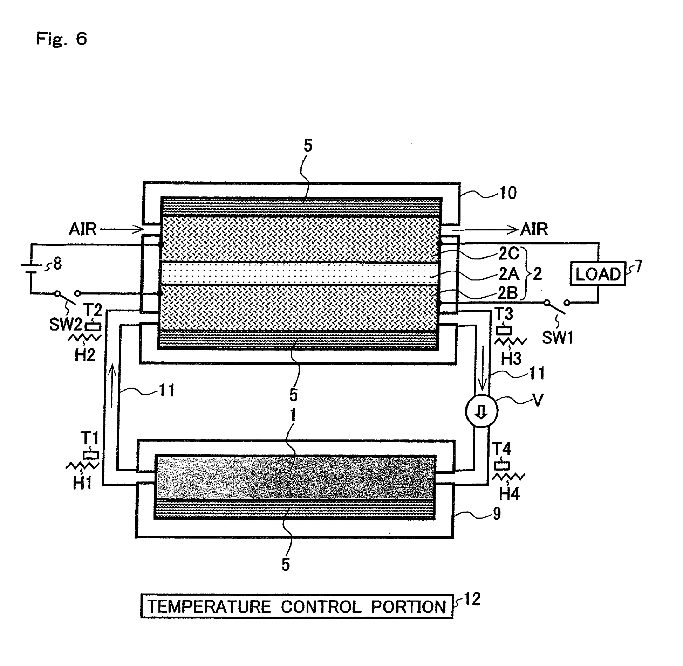

FIG. 6 shows a schematic configuration of a secondary battery type fuel cell system according to a fourth embodiment of the present invention. In FIG. 6, portions that are the same as those in FIGS. 4 and 5 are indicated by the same reference characters, and detailed descriptions thereof are omitted. Furthermore, in FIG. 6, for the sake of avoiding complexity of the drawing, connection lines connecting first to fourth heaters H1 to H4 and first to fourth temperature sensors T1 to T4 to a temperature control portion 12 are not drawn.

The secondary battery type fuel cell system according to the fourth embodiment of the present invention has a configuration in which the pump 4 is removed from the secondary battery type fuel cell system according to the second embodiment of the present invention, and instead, the first to fourth heaters H1 to H4, the first to fourth temperature sensors T1 to T4, and the temperature control portion 12 are provided. Temperature control by the temperature control portion 12 is performed in a similar manner to that in the third embodiment of the present invention, and a description thereof, therefore, is omitted.

A power generation reaction and a charging reaction that occur at various portions of the secondary battery type fuel cell system according to the fourth embodiment of the present invention are the same as the power generation reaction and the charging reaction that occur at the various portions of the secondary battery type fuel cell system according to the second embodiment of the present invention, and thus the secondary battery type fuel cell system according to the fourth embodiment of the present invention provides similar effects to those provided by the secondary battery type fuel cell system according to the second embodiment of the present invention.

It is also possible to implement the second embodiment of the present invention and the fourth embodiment of the present invention in combination, i.e. to use a circulator for forcibly causing gas to circulate between the fuel generation portion 1 and the fuel cell portion 2 together with a heating device that provides a temperature gradient in a gas flow path for causing gas to circulate between the fuel generation portion 1 and the fuel cell portion 2.

### List of Reference Symbols

- 1: fuel generation portion
- 2: fuel cell portion
- 2A: electrolyte membrane
- 2B: fuel electrode
- 2C: air electrode
- 3: partition member
- 4: pump
- 5: heater
- 6, 9, 10: housing
- 7: load
- 8: power source
- 11: duct
- 12: temperature control portion
- F1: fuel release surface
- F2: fuel supply surface
- H1 to H4: first to fourth heaters
- T1 to T4: first to fourth temperature sensors
- SW1, SW2: switch

## Claims

1. A secondary battery type fuel cell system, comprising:
a fuel cell portion that has a fuel electrode, an oxidant electrode, and an electrolyte that is sandwiched between the fuel electrode and the oxidant electrode, and generates an oxidizing gas at a time of power generation; and
a fuel generation portion that generates a fuel, which is a reducing gas, by a chemical reaction with the oxidizing gas, and generates an oxidizing gas by a reaction reverse to the chemical reaction, thus being able to be regenerated,
wherein
in a sealed or closed space including the fuel electrode and the fuel generation portion, the oxidizing gas or the reducing gas is forcibly caused to circulate between the fuel cell portion and the fuel generation portion, and
a flow direction of the gas flowing along a surface of the fuel electrode at a time of a power generation operation is set to be the same as that at a time of a charging operation, and vice versa.

2. The secondary battery type fuel cell system according to claim 1, further comprising:
a first housing that houses the fuel cell portion;
a second housing that houses the fuel generation portion; and
a duct for causing the oxidizing gas or the reducing gas to circulate between the fuel cell portion and the fuel generation portion.

3. The secondary battery type fuel cell system according to claim 1 or 2, further comprising:
a heating device that provides a temperature gradient in a gas flow path for causing, in the sealed or closed space including the fuel electrode and the fuel generation portion, the oxidizing gas or the reducing gas to circulate between the fuel cell portion and the fuel generation portion,
wherein by use of the temperature gradient, the oxidizing gas or the reducing gas is forcibly caused to circulate between the fuel cell portion and the fuel generation portion.

4. The secondary battery type fuel cell system according to any one of claims 1 to 3, further comprising:
a circulator for forcibly causing, in the sealed or closed space including the fuel electrode and the fuel generation portion, the oxidizing gas or the reducing gas to circulate between the fuel cell portion and the fuel generation portion.

5. The secondary battery type fuel cell system according to claim 1, wherein
a fuel release surface of the fuel generation portion and a fuel supply surface of the fuel electrode are disposed so as to be opposed to each other, and
the secondary battery type fuel cell system further comprises, in the sealed or closed space including the fuel electrode and the fuel generation portion, a partition member that is disposed along the fuel release surface.
